# EUROPEAN PATENT APPLICATION

(11) **EP 4 657 702 A1**
(43) Date of publication of application: **03.12.2025**
(21) Application number: 23919447.5
(22) Date of filing: 22.11.2023
(51) Int. Cl.: H02J 7/00, B60L 58/10, B60L 58/18, B60L 58/27, B60L 50/60, B60L 15/20

(54) **BATTERY CONTROL MODULE, BATTERY PACK, AND BATTERY CONTROL SYSTEM**

(30) Priority: 03.02.2023 CN 202320171604 U
(71) Applicant: Contemporary Amperex Technology Co., Limited, Ningde, Fujian 352100 (CN)
(72) Inventor: LIU, Diping, Ningde, Fujian 352100 (CN); YAN, Yu, Ningde, Fujian 352100 (CN); HUANG, Xiaojian, Ningde, Fujian 352100 (CN); CHEN, Wei, Ningde, Fujian 352100 (CN); CHEN, Xing, Ningde, Fujian 352100 (CN)
(74) Representative: Ziebig Hengelhaupt Intellectual Property Attorneys Patentanwaltskanzlei PartGmbB
(86) International application number: PCT/CN2023/133344
(87) International publication number: WO 2024/159883

(57) **Abstract**

A battery control module, a battery pack, and a battery control system are provided. The battery control module includes a first circuit (L1), a second circuit (L2), and a third circuit (L3). The first circuit is connected to a positive electrode of a first battery module, the second circuit is connected to a positive electrode of a second battery module, and negative electrodes of the first battery module and the second battery module are both connected to the third circuit. The first circuit, the second circuit, and the third circuit are connected to a motor control circuit. Each circuit is a circuit with an adjustable on-off state, to switch a circuit connection relationship between the first battery module and the second battery module with the motor control circuit. Therefore, a connection loop in the battery control module is simply adjusted according to different battery grouping types, so that output requirements of battery modules of different grouping types can be satisfied, and the present application can be simply and flexibly applied to the battery modules of different grouping types.

## Description

### CROSS-REFERENCE TO RELATED APPLICATIONS

The present application claims priority to Chinese Patent Application No. 202320171604.7, filed with the China National Intellectual Property Administration on February 3, 2023 and entitled "BATTERY CONTROL MODULE, BATTERY PACK, AND BATTERY CONTROL SYSTEM", which is incorporated herein by reference in its entirety.

### TECHNICAL FIELD

The present application relates to the field of battery technologies, and specifically, to a battery control module, a battery pack, and a battery control system.

### BACKGROUND

Electric vehicles are widely prompted since the electric vehicles have less impact on an environment than conventional vehicles. A battery is an important component of an electric vehicle and is configured to provide a power source for a driving system of the electric vehicle.

In some cases, when the electric vehicle is in a traveling mode, the battery is connected to a motor control circuit through a battery control box, so that the battery is controlled through the battery control box to provide a power source for a motor in the motor control circuit. When the electric vehicle is in a heating mode, a motor control unit (MCU) in the motor control circuit controls the motor to self-heat the battery through the battery control box.

However, in the foregoing case, the battery control box cannot be directly used in battery modules of some grouping types, and the battery control box generally needs to be adjusted. As a result, the battery control box in the foregoing case has limited applicability.

### SUMMARY

In view of the foregoing problem, the present application provides a battery control module, a battery pack, and a battery control system, which can resolve the problem of limited applicability of a battery control box in the foregoing case.

According to a first aspect, the present application provides a battery control module. The battery control module includes: a first circuit, a second circuit, and a third circuit, where the first circuit is connected to a positive electrode of a first battery module, the second circuit is connected to a positive electrode of a second battery module, and negative electrodes of the first battery module and the second battery module are both connected to the third circuit. The first circuit, the second circuit, and the third circuit are connected to a motor control circuit.

Each circuit in the battery control module is a circuit with an adjustable on-off state, to switch a circuit connection relationship between the first battery module and the second battery module with the motor control circuit.

In the technical solutions of the embodiments of the present application, the battery control box may include a first circuit, a second circuit, and a third circuit, where the first circuit is connected to a positive electrode of a first battery module, the second circuit is connected to a positive electrode of a second battery module, and negative electrodes of the first battery module and the second battery module are both connected to the third circuit. The first circuit, the second circuit, and the third circuit are connected to a motor control circuit. In the embodiments of the present application, each circuit is a circuit with an adjustable on-off state, to switch a circuit connection relationship between the first battery module and the second battery module with the motor control circuit. Therefore, a connection loop in the battery control module can be simply adjusted according to different battery grouping types, so that output requirements of battery modules of different grouping types can be satisfied, and the present application can be simply and flexibly applied to the battery modules of different grouping types.

In some embodiments, when the battery control module is in different modes, at least one circuit in the battery control module has different on-off states.

In some embodiments, when the battery control module is in a first mode, the first circuit, the second circuit, and the third circuit are all in an on state, and the first battery module and the second battery module are respectively connected to the motor control circuit to form a heating loop, to heat the first battery module and the second battery module.

In the technical solutions of the embodiments of the present application, when the battery control module is in the first mode, the first circuit, the second circuit, and the third circuit are all in the on state. Therefore, the first battery module and the second battery module are respectively connected to the motor control circuit to form the heating loop, so that the first battery module and the second battery module can be heated at different frequencies in a manner of transmitting a current between the first battery module and the second battery module through the heating loop.

In some embodiments, when the battery control module is in a second mode, the first circuit and the third circuit are in an on state, the second circuit is in an off state, and the first battery module and the second battery module are connected to the motor control circuit, to jointly provide electric energy for the motor control circuit.

In some embodiments, the battery control module further includes a fourth circuit, a first end of the fourth circuit is connected to the second circuit, a second end of the fourth circuit is connected to the third circuit, and the fourth circuit controls the first battery module and the second battery module to be connected in series or connected in parallel.

In the technical solutions of the embodiments of the present application, by arranging the fourth circuit between the second circuit and the third circuit, a connection loop in the battery control module can be flexible switched, so that output requirements of battery modules of different grouping types can be satisfied.

In some embodiments, the third circuit includes a first control circuit, and the first control circuit is connected to the negative electrode of the first battery module; and
when the battery control module is in the first mode, the first control circuit is in an on state; or
when the battery control module is in the second mode and the first battery module and the second battery module are connected in parallel, the first control circuit is in an on state.

In the technical solutions of the embodiments of the present application, by arranging the first control circuit in the third circuit, a connection loop in the battery control module can be flexible switched, so that output requirements of battery modules of different grouping types can be satisfied.

In some embodiments, a first end of a second control circuit is connected to the second circuit; and
when the battery control module is in the second mode and the first battery module and the second battery module are connected in parallel, the second control circuit is in an on state, so that an output requirement of connecting two battery modules in parallel can be satisfied.

In some embodiments, when the battery control module is in the second mode and the first battery module and the second battery module are connected in series, the fourth circuit is an on state.

In some embodiments, the first circuit further includes: a first current sensor and a first switch that are connected in series, where a second end of the second control circuit is connected to the first current sensor and the first switch, and when the first switch is in a switch-on state, the first circuit is in the on state; or when the first switch is in a switch-off state, the first circuit is in an off state.

In some embodiments, the second circuit includes: a second current sensor and a second switch that are connected in series, where when the second switch is in a switch-on state, the second circuit is in the on state; or when the second switch is in a switch-off state, the second circuit is in the off state.

In some embodiments, the third circuit further includes a pre-charging circuit, where the pre-charging circuit includes a third switch and a pre-charging resistor that are connected in series, a first end of the third switch is connected to the first control circuit and the negative electrode of the second battery module, a second end of the third switch is connected to a first end of the pre-charging resistor, and a second end of the pre-charging resistor is connected to the motor control circuit.

In some embodiments, the third circuit further includes a fourth switch, a first end of the fourth switch is connected to the first control circuit and the negative electrode of the second battery module, and a second end of the fourth switch is connected to the motor control circuit.

In some embodiments, the third circuit further includes a fuse, where the fuse is connected to the fourth switch in series, so that the battery control module can be further protected.

According to a second aspect, the present application provides a battery pack, where the battery pack includes: a first battery module, a second battery module, and the battery control module according to the first aspect.

According to a third aspect, the present application provides a battery control system, where the battery control system includes a motor control circuit and the battery pack according to the second aspect.

In some embodiments, the motor control circuit includes: a first bridge arm module, a second bridge arm module, and a third control circuit, a first end of the first bridge arm module is connected to the first circuit, a second end of the first bridge arm module is connected to the third circuit, a first end of the second bridge arm module is connected to the second circuit, a second end of the second bridge arm module is connected to the second end of the first bridge arm module, and the third control circuit is arranged between the first end of the first bridge arm module and the first end of the second bridge arm module; and
when the battery control module is in a first mode, the third control circuit is in an off state; or
when the battery control module is in a second mode, the third control circuit is in an on state.

The foregoing description is only a summary of the technical solutions of the present application. In order to understand the technical means of the present application more clearly, the technical means can be implemented according to content of this specification. In order to make the above-mentioned and other objectives, features, and advantages of the present application more comprehensible, specific implementations of the present application are listed below.

### BRIEF DESCRIPTION OF THE DRAWINGS

Various other advantages and benefits will become apparent to a person of ordinary skill in the art upon reading the following detailed description of preferred implementations. The accompanying drawings are only for the purpose of illustrating the preferred implementations and are not construed as a limitation to the present application. In addition, in all the accompanying drawings, same parts are indicated by same reference numerals. In the accompanying drawings:
FIG. 1 is a schematic structural diagram of a battery control module according to some embodiments of the present application;
FIG. 2 is a schematic structural diagram of a battery control module according to some other embodiments of the present application;
FIG. 3 is a schematic structural diagram of a battery control module according to some other embodiments of the present application;
FIG. 4 is a schematic structural diagram of a battery control module according to some other embodiments of the present application;
FIG. 5 is a schematic structural diagram of a battery control module according to some other embodiments of the present application;
FIG. 6 is a schematic structural diagram of a battery control module according to some other embodiments of the present application;
FIG. 7 is a schematic structural diagram of a battery control module according to some other embodiments of the present application;
FIG. 8 is a schematic architectural diagram of a battery control system corresponding to a single-branch battery module in the related art;
FIG. 9A is a schematic structural diagram of a motor control circuit according to an embodiment of the present application;
FIG. 9B is a schematic architectural diagram of a battery control system corresponding to a single-branch battery module according to an embodiment of the present application;
FIG. 10 is a schematic architectural diagram of a battery control system corresponding to a double-branch parallel battery module in the related art;
FIG. 11 is a schematic architectural diagram of a battery control system in a traveling mode corresponding to a double-branch parallel battery module according to an embodiment of the present application;
FIG. 12 is a schematic architectural diagram of a battery control system in a heating mode corresponding to a double-branch parallel battery module according to an embodiment of the present application;
FIG. 13 is a schematic architectural diagram of a battery control system corresponding to a double-branch series battery module in the related art;
FIG. 14 is a schematic architectural diagram of a battery control system in a traveling mode corresponding to a double-branch series battery module according to an embodiment of the present application; and
FIG. 15 is a schematic architectural diagram of a battery control system in a heating mode corresponding to a double-branch series battery module according to an embodiment of the present application.

### DETAILED DESCRIPTION

The embodiments of the technical solutions of the present application will be described in detail below with reference to the accompanying drawings. The following embodiments are only used to describe the technical solutions of the present application more explicitly, and are thus only interpreted as examples, rather than used to limit the protection scope of the present application.

Unless otherwise defined, meanings of all technical and scientific terms used herein are the same as those usually understood by a person skilled in the art to which the present application belongs. The terms used herein are only intended to describe specific embodiments, instead of limiting the present application. The term "include" and any variant thereof in the description and the claims of the present application and the description of the accompanying drawings are intended to cover non-exclusive inclusion.

In the description of the embodiments of the present application, the technical terms "first", "second", and the like are only intended to distinguish different objects, and should not be understood as indicating or implying relative importance or implying a quantity, specific order or a primary-secondary relationship of indicated technical features. In the description of the embodiments of the present application, "a plurality of" means two or more (including two), unless otherwise expressly and specifically defined.

Generally, electric vehicles of different types may have different requirements on a battery. For example, some electric vehicles only require the battery to provide electric energy that satisfies a basic requirement, some electric vehicles require the battery to provide electric energy with a large current, and some electric vehicles require the battery to have a large capacity and provide electric energy with a large voltage. Therefore, battery grouping types of the electric vehicles mainly include: a single-branch battery module, a double-branch parallel battery module, and a double-branch series battery module.

To resolve the problem of limited applicability of a battery control box in the foregoing case, it is found through research by the applicant that, a battery control module that may be compatible with a plurality of battery grouping types may be designed, so that in an actual use process, according to different battery grouping types, output requirements of battery modules of different grouping types can be satisfied by switching a connection loop in the battery control module. Therefore, the present application may be flexibly applied to battery modules of different grouping types, and the applicability of the battery control module in the embodiments of the present application is improved.

Based on the foregoing concern, the applicant proposes, through research, a battery control module, including a first circuit, a second circuit, and a third circuit, where the first circuit is connected to a positive electrode of a first battery module, the second circuit is connected to a positive electrode of a second battery module, and negative electrodes of the first battery module and the second battery module are both connected to the third circuit. The first circuit, the second circuit, and the third circuit are connected to a motor control circuit. In the embodiments of the present application, each circuit is a circuit with an adjustable on-off state, to switch a circuit connection relationship between the first battery module and the second battery module with the motor control circuit. Therefore, a connection loop in the battery control module can be adjusted according to different battery grouping types, so that output requirements of battery modules of different grouping types can be satisfied, and the present application can be simply and flexibly applied to the battery modules of different grouping types.

A power consuming device provided in the embodiments of the present application may be, but not limited to, an electric toy, an electric tool, a battery car, an electric automobile, a ship, a spacecraft, or the like. The electric toy may include a fixed or mobile electric toy, for example, an electric automobile toy, an electric ship toy, and an electric airplane toy. The spacecraft may include an airplane, a rocket, a spacecraft, a spaceship, and the like.

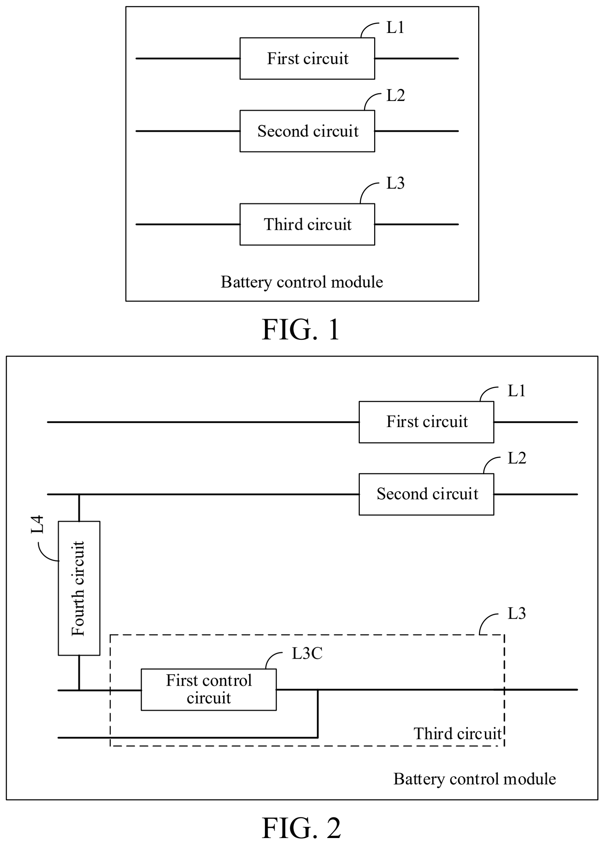

In some embodiments, FIG. 1 is a schematic structural diagram of a battery control module according to some embodiments of the present application. As shown in FIG. 1, the battery control module in the embodiments of the present application may include: a first circuit L1, a second circuit L2, and a third circuit L3. The first circuit L1 is connected to a positive electrode of a first battery module (not shown in FIG. 1), the second circuit L2 is connected to a positive electrode of a second battery module (not shown in FIG. 1), and negative electrodes of the first battery module and the second battery module are both connected to the third circuit L3. The first circuit L1, the second circuit L2, and the third circuit L3 are connected to a motor control circuit (not shown in FIG. 1).

For example, a first end of the first circuit L1 is connected to the positive electrode of the first battery module (not shown in FIG. 1), a first end of the second circuit L2 is connected to the positive electrode of the second battery module (not shown in FIG. 1), and the negative electrodes of the first battery module and the second battery module are both connected to a first end of the third circuit L3. A second end of the first circuit L1 is connected to a first positive port (not shown in FIG. 1) of the motor control circuit, a second end of the second circuit L2 is connected to a second positive port (not shown in FIG. 1) of the motor control circuit, and a second end of the third circuit L3 is connected to a negative port (not shown in FIG. 1) of the motor control circuit.

It should be noted that, the first circuit L1, the second circuit L2, and the third circuit L3 involved in the embodiments of the present application are all circuits with an adjustable on-off state, to switch a circuit connection relationship between the first battery module and the second battery module with the motor control circuit. Therefore, when the battery control module is in different modes, a connection loop in the battery control module can be adjusted according to different battery grouping types, so that output requirements of battery modules of different grouping types can be satisfied, and the present application can be flexibly applied to the battery modules of different grouping types.

For example, for a battery module of any grouping type, when the battery control module is in different modes, on-off states of at least one circuit in the battery control module may be different, so that the connection loop in the battery control module when the battery control module is in different modes is different.

In a possible implementation, when the battery control module is in a first mode, the first circuit L1, the second circuit L2, and the third circuit L3 are in an on state, and the first battery module and the second battery module are respectively connected to the motor control circuit to form a heating loop, to heat the first battery module and the second battery module.

It should be understood that, the battery control device involved in the embodiments of the present application being in any mode may refer to that a power consuming device to which the battery control module belongs is in the mode.

In this implementation, when the battery control module is in the first mode (for example, a heating mode), the first circuit L1, the second circuit L2, and the third circuit L3 are in the on state, the positive electrode of the first battery module is connected to the first positive port of the motor control circuit through the first circuit L1, and the negative electrode of the first battery module is connected to the negative port of the motor control circuit through the third circuit L3; and the positive electrode of the second battery module is connected to the second positive port of the motor control circuit through the second circuit L2, and the negative electrode of the second battery module is connected to the negative port of the motor control circuit through the third circuit L3.

As can be seen, when the first circuit L1, the second circuit L2, and the third circuit L3 are in the on state, the first battery module and the second battery module are respectively connected to the motor control circuit to form the heating loop between the first battery module and the second battery module, so that a current is transmitted between the first battery module and the second battery module through the heating loop, thereby heating the first battery module and the second battery module.

For example, a current transmission direction between the first battery module and the second battery module may be changed, that is, changed between transmitting a current from the first battery module to the second battery module and transmitting a current from the second battery module to the first battery module. It should be noted that, a change frequency of the current transmission direction between the first battery module and the second battery module may affect a heating frequency of a battery, so that the battery module can be self-heated at different frequencies.

It should be noted that, compared with a manner of controlling a motor to heat a battery in the foregoing case, in the embodiments of the present application, a temperature rising rate of the heating manner of transmitting a current between the first battery module and the second battery module is high.

As can be seen, in this implementation, when the battery control module is in the first mode, the first circuit L1, the second circuit L2, and the third circuit L3 are in the on state, so that the first battery module and the second battery module are respectively connected to the motor control circuit to form the heating loop. Therefore, the first battery module and the second battery module can be self-heated at different frequencies in the manner of transmitting a current between the first battery module and the second battery module through the heating loop, thereby improving the temperature rising efficiency of the battery.

In another possible implementation, when the battery control module is in a second mode, the first circuit and the third circuit are in an on state, the second circuit is in an off state, and the first battery module and the second battery module are connected to the motor control circuit, to jointly provide electric energy for the motor control circuit.

In this implementation, when the battery control module is in the second mode (for example, a traveling mode), the first circuit L1 and the third circuit L3 are in the on state, and the second circuit L2 is in the off state, so that the first battery module and the second battery module may be connected to the motor control circuit by sharing the first circuit L1, which is equivalent to causing the first battery module and the second battery module to form a battery module to jointly provide a power source for a motor in the motor control circuit.

Based on the above, the battery control box provided in the embodiments of the present application includes a first circuit, a second circuit, and a third circuit, where the first circuit is connected to the positive electrode of the first battery module, the second circuit is connected to the positive electrode of the second battery module, and the negative electrodes of the first battery module and the second battery module are both connected to the third circuit. The first circuit, the second circuit, and the third circuit are connected to the motor control circuit. In the embodiments of the present application, each circuit is a circuit with an adjustable on-off state, to switch the circuit connection relationship between the first battery module and the second battery module with the motor control circuit. Therefore, a connection loop in the battery control module can be simply adjusted according to different battery grouping types, so that output requirements of battery modules of different grouping types can be satisfied, and the present application can be simply and flexibly applied to the battery modules of different grouping types. In addition, in the embodiments of the present application, flexibly switching the connection loop in the battery control module is also conducive to implementing self-heating requirements at different frequencies of battery modules of different grouping types.

In some embodiments, FIG. 2 is a schematic structural diagram of a battery control module according to some other embodiments of the present application. Based on the foregoing embodiments, as shown in FIG. 2, the battery control module in the embodiments of the present application may further include a fourth circuit L4, where a first end of the fourth circuit L4 is connected to the second circuit L2, and a second end of the fourth circuit L4 is connected to the third circuit L3; and the fourth circuit L4 may control the first battery module and the second battery module to be connected in series or connected in parallel.

It should be noted that, the fourth circuit L4 involved in the embodiments of the present application is a circuit with an adjustable on-off state, so that a connection loop in the battery control module may be switched, where the fourth circuit L4 may be in an on state or an off state. It should be understood that, when the on-off state of the fourth circuit L4 differs, a connection manner between the first battery module and the second battery module differs.

In a possible implementation, when the fourth circuit L4 is in the on state, it is equivalent to connecting the negative electrode of the first battery module and the positive electrode of the second battery module, so that the first battery module and the second battery module may be connected in series.

For example, when the battery control module is in the second mode and the first battery module and the second battery module are connected in series, the fourth circuit L4 may be in the on state.

It should be understood that, when the battery control module is in another mode or the first battery module and the second battery module are connected in parallel, the fourth circuit L4 is in the off state. In another possible implementation, when the fourth circuit L4 is in the off state, it is equivalent to not connecting the negative electrode of the first battery module and the positive electrode of the second battery module, so that the first battery module and the second battery module may be connected in parallel.

As can be seen, in the embodiments of the present application, by arranging the fourth circuit between the second circuit and the third circuit, a connection loop in the battery control module can be flexibly switched, so that output requirements of battery modules of different grouping types can be satisfied.

In some embodiments, based on the foregoing embodiments, as shown in FIG. 2, the third circuit L3 in the embodiments of the present application may include: a first control circuit L3C, where a first end of the first control circuit L3C may be respectively connected to the fourth circuit L4 and the negative electrode of the first battery module, and a second end of the first control circuit L3C may be respectively connected to the negative electrode of the second battery module and the motor control circuit.

It should be noted that, the first control circuit L3C involved in the embodiments of the present application is a circuit with an adjustable on-off state, so that a connection loop in the battery control module may be switched, where the first control circuit L3C may be in an on state or an off state. It should be understood that, the on-off state of the first control circuit L3C is related to the connection manner between the first battery module and the second battery module and/or an operating mode of the battery control module.

For example, when the battery control module is in the first mode, the first control branch L3C may be in the on state, which is equivalent to connecting the negative electrode of the first battery module and the negative electrode of the second battery module to form the heating loop, so as to heat the first battery module and the second battery module.

For another example, when the battery control module is in the second mode and the first battery module and the second battery module are connected in parallel, the first control branch L3C is in the on state, which is equivalent to connecting the negative electrode of the first battery module and the negative electrode of the second battery module, so that the first battery module and the second battery module are connected in parallel.

As can be seen, in the embodiments of the present application, by arranging the first control circuit in the third circuit, a connection loop in the battery control module can be flexibly switched, so that output requirements of battery modules of different grouping types can be satisfied.

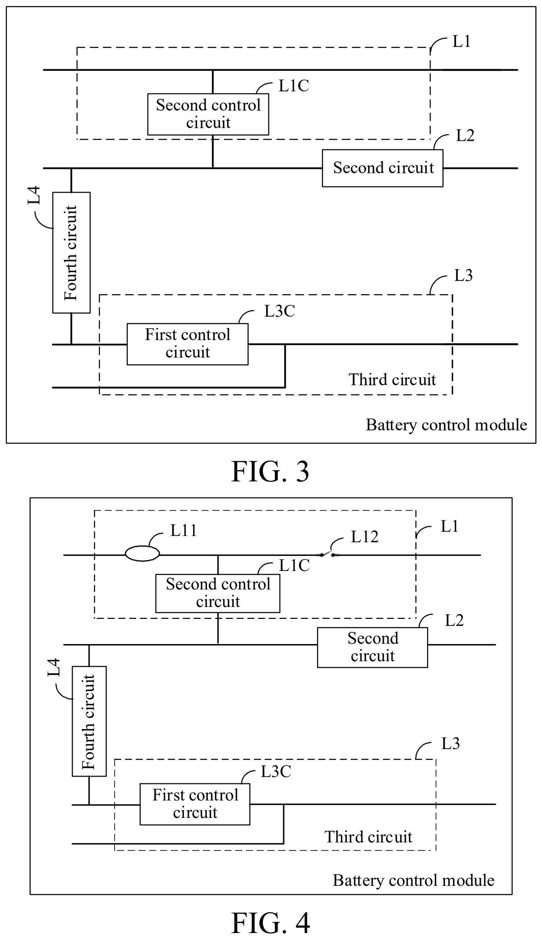

In some embodiments, FIG. 3 is a schematic structural diagram of a battery control module according to some other embodiments of the present application. Based on the foregoing embodiments, as shown in FIG. 3, the first circuit L1 in the embodiments of the present application may include a second control circuit L1C, where a first end of the second control circuit L1C may be connected to the second circuit L2, and a second end of the second control circuit L1C may be respectively connected to the positive electrode of the first battery module and the motor control circuit.

It should be noted that, the second control circuit L1C involved in the embodiments of the present application is a circuit with an adjustable on-off state, so that a connection loop in the battery control module may be switched, where the second control circuit L1C may be in an on state or an off state. It should be understood that, the on-off state of the second control circuit L1C is related to the connection manner between the first battery module and the second battery module and/or an operating mode of the battery control module.

For example, when the battery control module is in the second mode and the first battery module and the second battery module are connected in parallel, the second control circuit L1C is in the on state, which is equivalent to connecting the positive electrode of the first battery module and the positive electrode of the second battery module, so that an output requirement of connecting two battery modules in parallel can be satisfied.

It should be understood that, when the battery control module is in another mode or the first battery module and the second battery module are connected in series, the second control circuit L1C is in the off state.

In some embodiments, FIG. 4 is a schematic structural diagram of a battery control module according to some other embodiments of the present application. Based on the foregoing embodiments, related content of the first circuit L1 is described in the embodiments of the present application. As shown in FIG. 4, the first circuit L1 in the embodiments of the present application may further include, but not limited to, a first current sensor L11 and a first switch L12 that are connected in series. A first end of the first current sensor 11 may be connected to the positive electrode of the first battery module, a second end of the first current sensor 11 is connected to a first end of the first switch L12, and a second end of the first switch L12 may be connected to the first positive port of the motor control circuit; and the second end of the second control circuit L1C may be connected to the second end of the first current sensor and the first end of the first switch L12. It should be noted that, positions of the first current sensor L11 and the first switch L12 may be exchanged.

In the embodiments of the present application, the first current sensor L11 monitors a current on the first circuit L1, and the first switch L12 controls the on-off state of the first circuit L1. For example, the first switch L12 may include, but not limited to, a high-voltage contactor, a high-voltage relay, or a controllable transistor. For example, the controllable transistor may include an MOS transistor or an IGBT transistor.

It should be understood that, when the first switch L12 is in a switch-on state, the first circuit L1 is in the on state; and when the first switch L12 is in a switch-off state, the first circuit L1 is in the off state.

As can be seen, in the embodiments of the present application, the on-off state of the first circuit may be controlled through the first switch, so that a connection loop in the battery control module can be flexibly switched.

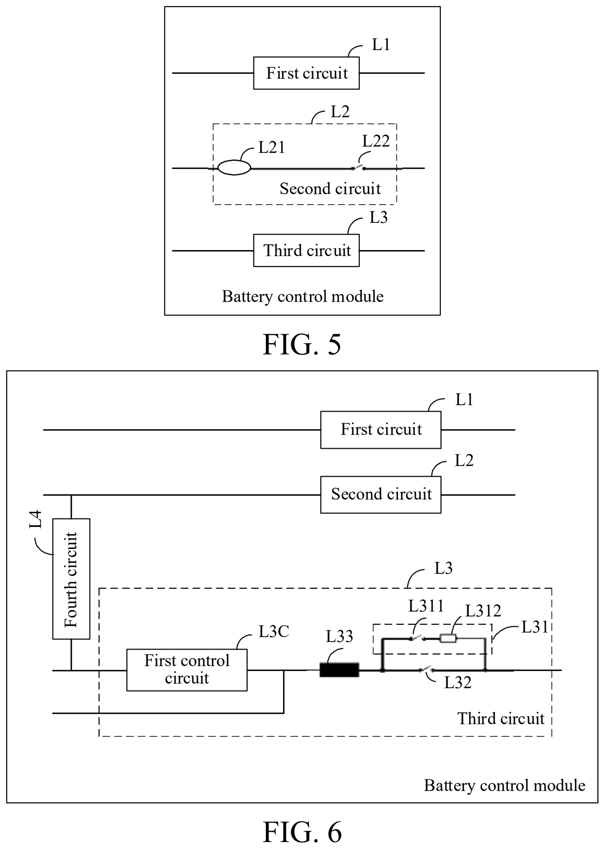

In some embodiments, FIG. 5 is a schematic structural diagram of a battery control module according to some other embodiments of the present application. Based on the foregoing embodiments, related content of the second circuit L2 is described in the embodiments of the present application. As shown in FIG. 5, the second circuit L2 in the embodiments of the present application may include, but not limited to, a second current sensor L21 and a second switch L22 that are connected in series. A first end of the second current sensor L21 may be connected to the positive electrode of the second battery module, a second end of the second current sensor L21 is connected to a first end of the second switch L22, and a second end of the second switch L22 may be connected to the second positive port of the motor control circuit. It should be noted that, positions of the second current sensor L21 and the second switch L22 may be exchanged.

In the embodiments of the present application, the second current sensor L21 monitors a current on the second circuit L2, and the second switch L22 controls the on-off state of the second circuit L2. For example, the second switch L22 may include, but not limited to, a high-voltage contactor, a high-voltage relay, or a controllable transistor.

It should be understood that, when the second switch L22 is in a switch-on state, the second circuit L2 is the on state; and when the second switch L22 is in a switch-off state, the second circuit L2 is in the off state.

As can be seen, in the embodiments of the present application, the on-off state of the second circuit may be controlled through the second switch, so that a connection loop in the battery control module can be flexibly switched.

In some embodiments, FIG. 6 is a schematic structural diagram of a battery control module according to some other embodiments of the present application. Based on the foregoing embodiments, related content of the third circuit L3 is described in the embodiments of the present application. As shown in FIG. 6, the third circuit L3 in the embodiments of the present application may further include a pre-charging circuit L31, where the pre-charging circuit L31 may include a third switch L311 and a pre-charging resistor L312 that are connected in series, a first end of the third switch L311 is connected to the first control circuit L3C and the negative electrode of the second battery module, a second end of the third switch L311 is connected to a first end of the pre-charging resistor L312, and a second end of the pre-charging resistor L312 is connected to the motor control circuit (for example, the negative port of the motor control circuit).

For example, the third circuit L3 may further include a fourth switch L32, where a first end of the fourth switch L32 is connected to the first control circuit L3C and the negative electrode of the second battery module, and a second end of the fourth switch is connected to the motor control circuit.

It should be understood that, in an initial connection stage, the third switch L311 is in a switch-on state, and the fourth switch L32 is in a switch-off state, so that the pre-charging resistor L312 can play a specific current limiting function on a current that passes through the pre-charging resistor, thereby preventing the current from being excessively large and damaging a device; and when a preset switching condition is satisfied, the third switch L311 is in a switch-off state, and the fourth switch L32 is in a switch-on state, the current can be directly transmitted through the fourth switch L32.

For example, the third switch L311 and the fourth switch L32 may include, but not limited to, high-voltage contactors, high-voltage relays, or controllable transistors.

Further, to protect the battery control module, the third circuit L3 in the embodiments of the present application may further include a fuse L33 that is connected in series to the fourth switch L32, where a first end of the fuse L33 is connected to the first control circuit L3C and the negative electrode of the second battery module, and a second end of the fuse L33 is respectively connected to the pre-charging circuit L31 and the fourth switch L32.

As can be seen, in the embodiments of the present application, an on-off state of the third circuit may be controlled through the third switch, the fourth switch, and/or the first control circuit in the third circuit, so that a connection loop in the battery control module can be flexibly switched.

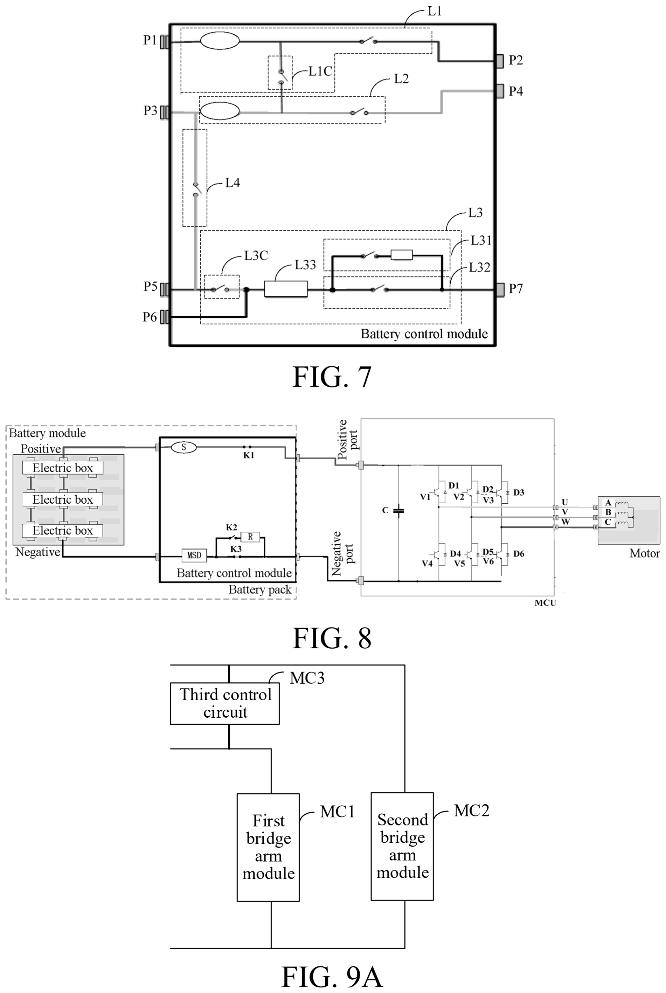

In some embodiments, FIG. 7 is a schematic structural diagram of a battery control module according to some other embodiments of the present application. Based on the foregoing embodiments, an overall structure of the battery control module is described in the embodiments of the present application. As shown in FIG. 7, the battery control module in the embodiments of the present application may include: a first circuit L1, a second circuit L2, a third circuit L3, and a fourth circuit L4. The first circuit L1 may include: a second control circuit L1C, and a first current sensor and a first switch that are connected in series. The second circuit L2 may include: a second current sensor and a second switch that are connected in series. The third circuit L3 may include: a first control circuit L3C, a pre-charging circuit L31, a fourth switch L32, and a fuse L33, where the pre-charging circuit L31 may include a third switch and a pre-charging resistor that are connected in series.

It should be understood that, the first control circuit L3C, the second control circuit L1C, and the fourth circuit L4 may respectively include corresponding switches, to control on-off states of the corresponding circuits. For example, a fifth switch in the fourth circuit L4, a sixth switch in the first control circuit L3C, and a seventh switch in the second control circuit L1C may include, but not limited to, high-voltage contactors, high-voltage relays, or controllable transistors.

For example, a first end of the first current sensor L11 in the first circuit L1 may be connected to a first battery positive port P1 of the battery control module, to be connected to the positive electrode of the first battery module; and a second end of the first switch L12 in the first circuit L1 may be connected to a first loop positive port P2 of the battery control module, to be connected to the first positive port of the motor control circuit.

For example, a first end of the second current sensor L21 in the second circuit L2 may be connected to a second battery positive port P3 of the battery control module, to be connected to the positive electrode of the second battery module; and a second end of the second switch L22 in the second circuit L2 may be connected to a second loop positive port P4 of the battery control module, to be connected to the second positive port of the motor control circuit.

For example, a first end of the first control circuit L3C may be connected to a first battery negative port P5 of the battery control module, to be connected to the negative electrode of the first battery module; and a second end of the first control circuit L3C may be connected to a first end of the fuse L33 in the third circuit L3 and a second battery negative port P6 of the battery control module, to be connected to the negative electrode of the second battery module. A second end of the pre-charging resistor in the third circuit L3 and a second end of the fourth switch are both connected to a loop negative port P7 of the battery control module, to be connected to the negative port of the motor control circuit.

For example, two ends of the fourth circuit L4 may be respectively connected to the second battery positive port P3 of the battery control module and the first battery negative port P5 of the battery control module.

For example, two ends of the second control circuit L1C may be respectively connected to a first end of the first switch in the first circuit L1 and a first end of the second switch in the second circuit L2.

It should be noted that, different devices in the battery control module in the embodiments of the present application may be connected through a copper bar or a high-voltage wiring harness. In addition, the first battery positive port P1, the first loop positive port P2, the second battery positive port P3, the second loop positive port P4, the first battery negative port P5, the second battery negative port P6, and the loop negative port P7 may all be high-voltage connectors.

For ease of understanding, overall structure of battery control modules corresponding to different battery grouping types are compared and described sequentially in the following embodiments with reference to the related art.

### 1) Single-branch battery module

FIG. 8 is a schematic architectural diagram of a battery control system corresponding to a single-branch battery module in the related art. As shown in FIG. 8, the battery control system provided in the related art may include: a battery pack and a motor control circuit, where the battery pack includes a battery module and a battery control module, and the battery module includes a plurality of electric boxes connected in series (three electric boxes are shown as an example in the figure). A positive electrode of the battery module is connected to a positive port of the motor control circuit through a current sensor and a switch K1 in the battery control module; and a negative electrode of the battery module is connected to a negative port of the motor control circuit through a fuse MSD and a parallel circuit (a parallel circuit formed by a switch K3 and a series circuit of a switch K2 and a resistor R) in the battery control module.

The motor control circuit includes: an MCU and a motor (including an A-phase winding, a B-phase winding, and a C-phase winding), where the MCU includes a capacitor C and three bridge arms (which are respectively connected to the three-phase windings of the motor) that are connected in parallel, and each bridge arm includes an upper bridge arm switch tube (for example, switch tubes V1 to V3 in FIG. 8) and a lower bridge arm switch tube (for example, switch tubes V4 to V6 in FIG. 8). It should be noted that, any switch tube in the embodiments of the present application may be a switch tube including a body diode (for example, diodes D1 to D6 in FIG. 8).

It should be noted that, when the battery control module is in a first mode or a second mode, the switch K1 and the switch K3 in the battery control module are in an on state. Only one battery module is included in the related art, so that a battery can only be heated at a low temperature rising rate by controlling the motor through the MCU to charge or discharge the battery through the battery control module in the related art.

For ease of understanding, the motor control circuit in the embodiments of the present application is described in the following embodiments.

FIG. 9A is a schematic structural diagram of a motor control circuit according to an embodiment of the present application. As shown in FIG. 9A, the motor control circuit may include: a first bridge arm module MC1, a second bridge arm module MC2, and a third control circuit MC3. A first end of the first bridge arm module MC1 is connected to a first circuit in the battery control module, a second end of the first bridge arm module MC1 is connected to a third circuit in the battery control module, a first end of the second bridge arm module MC2 is connected to a second circuit in the battery control module, a second end of the second bridge arm module MC2 is connected to the second end of the first bridge arm module MC1, and the third control circuit MC3 is arranged between the first end of the first bridge arm module MC1 and the first end of the second bridge arm module MC2.

For example, the first bridge arm module MC1 may include three bridge arms that are respectively connected to the A-phase winding, the B-phase winding, and the C-phase winding of the motor, the second bridge arm module MC2 may include one bridge arm that is connected to an L-phase winding of the motor, and each bridge arm includes an upper bridge arm switch tube and a lower bridge arm switch tube.

The third control circuit MC3 in this embodiment of the present application is a circuit with an adjustable on-off state, where the third control circuit MC3 may be in an on state or an off state. It should be understood that, the on-off state of the third control circuit MC3 may be related to an operating mode of the battery control module.

In a possible implementation, when the battery control module is in the first mode, the third control circuit MC3 is in the off state, so that the first bridge arm module MC1 and the second bridge arm module MC2 in the motor control circuit MC are divided into two modules for operating.

In another possible implementation, when the battery control module is in the second mode, the third control circuit MC3 is in the on state, so that the first bridge arm module MC1 and the second bridge arm module MC2 in the motor control circuit MC are used as an overall module for operating.

Certainly, the motor control circuit may further include another device (for example, a first capacitor, a second capacitor, and a motor), which is not limited in the embodiments of the present application.

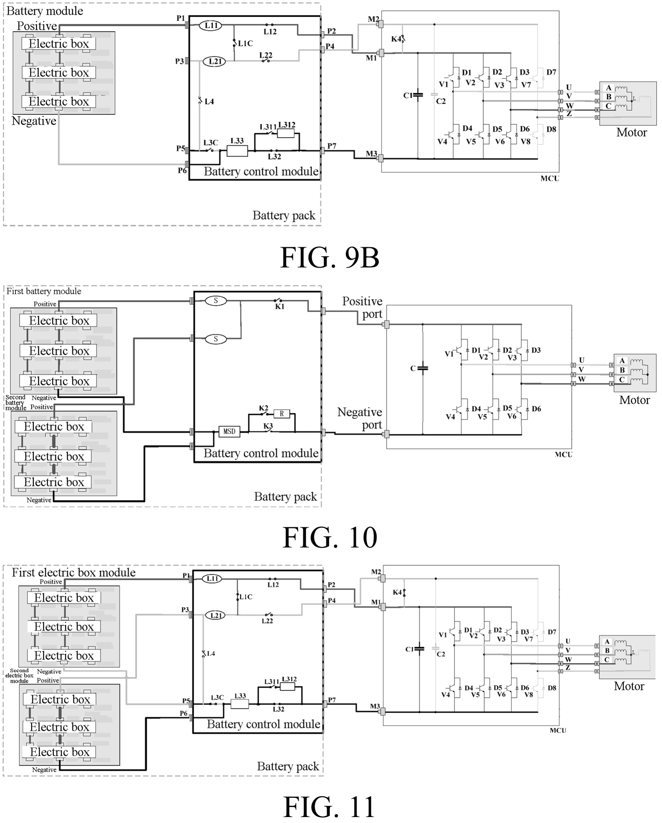

FIG. 9B is a schematic architectural diagram of a battery control system corresponding to a single-branch battery module according to an embodiment of the present application. As shown in FIG. 9B, the battery control system provided in this embodiment of the present application may include: a battery pack and a motor control circuit. A positive electrode of the battery module is connected to a first battery positive port P1 of the battery control module (for a structure of the battery control module, reference may be made to the structure shown in FIG. 7), and a negative electrode of the battery module is connected to a second battery negative port P6 of the battery control module.

The motor control circuit includes: an MCU and a motor (including an A-phase winding, a B-phase winding, a C-phase winding, and a neutral winding L-phase), where the MCU includes a first capacitor C1, three bridge arms that are respectively connected to the A-phase winding, the B-phase winding, and the C-phase winding of the motor, a second capacitor C2, one bridge arm connected to the L-phase winding of the motor, and a switch K4 between the first capacitor C1 and the second capacitor C2. Each bridge arm includes an upper bridge arm switch tube (for example, switch tubes V1 to V3 and V7 in FIG. 10) and a lower bridge arm switch tube (for example, switch tubes V4 to V6 and V8 in FIG. 9B). It should be noted that, any switch tube in the embodiments of the present application may be a switch tube including a body diode (for example, diodes D1 to D8 in FIG. 9B).

As shown in FIG. 9B, a first loop positive port P2 of the battery control module is connected to a first positive port M1 of the motor control circuit, to be connected to the first capacitor C1 in the MCU; a second loop positive port P4 of the battery control module is connected to a second positive port M2 of the motor control circuit, to be connected to the second capacitor C2 in the MCU; and a loop negative port P7 of the battery control module is connected to a negative port M3 of the motor control circuit.

For example, when the battery control module is in a traveling mode or a heating mode, the first switch L12 in the first circuit L1 in the battery control module and the fourth switch L32 in the third circuit L3 are in an on state, and the remaining switches are in an off state.

It should be understood that, for a single-branch battery module, the second circuit L2, the fourth circuit L4, the first control circuit L3C, and the second control circuit L1C do not need to be assembled in the battery control module.

In this embodiment of the present application, only one battery module is included, so that a battery can only be heated by controlling the motor through the MCU to charge or discharge the battery through the battery control module.

### 2) Double-branch parallel battery module

FIG. 10 is a schematic architectural diagram of a battery control system corresponding to a double-branch parallel battery module in the related art. As shown in FIG. 10, the battery control system provided in the related art may include: a battery pack and a motor control circuit, where the battery pack includes a first battery module, a second battery module, and a battery control module, and each battery module includes a plurality of electric boxes connected in series (three electric boxes are shown as an example in the figure).

Positive electrodes of the first battery module and the second battery module are connected to a positive port of the motor control circuit through a current sensor S and a switch K1 in the battery control module; and negative electrodes of the first battery module and the second battery module are connected to a negative port of the motor control circuit through a fuse MSD and a parallel circuit (a parallel circuit formed by a switch K3 and a series circuit of a switch K2 and a resistor R) in the battery control module.

The motor control circuit includes: an MCU and a motor (including an A-phase winding, a B-phase winding, and a C-phase winding), where the MCU includes a capacitor C and three bridge arms (which are respectively connected to the three-phase windings of the motor) that are connected in parallel, and each bridge arm includes an upper bridge arm switch tube and a lower bridge arm switch tube.

It should be noted that, when the battery control module is in a first mode or a second mode, the switch K1 and the switch K3 in the battery control module are in an on state.

In the related art, to be applied to a double-branch parallel battery module, a structure of the battery control module needs to be adjusted. For example, one current sensor and one branch connected to the negative electrode of the battery module need to be added. In addition, the structure of the battery control module in the related art is fixed, so that a battery can only be heated at a low temperature rising rate by controlling the motor through the MCU to charge or discharge the battery through the battery control module in the related art.

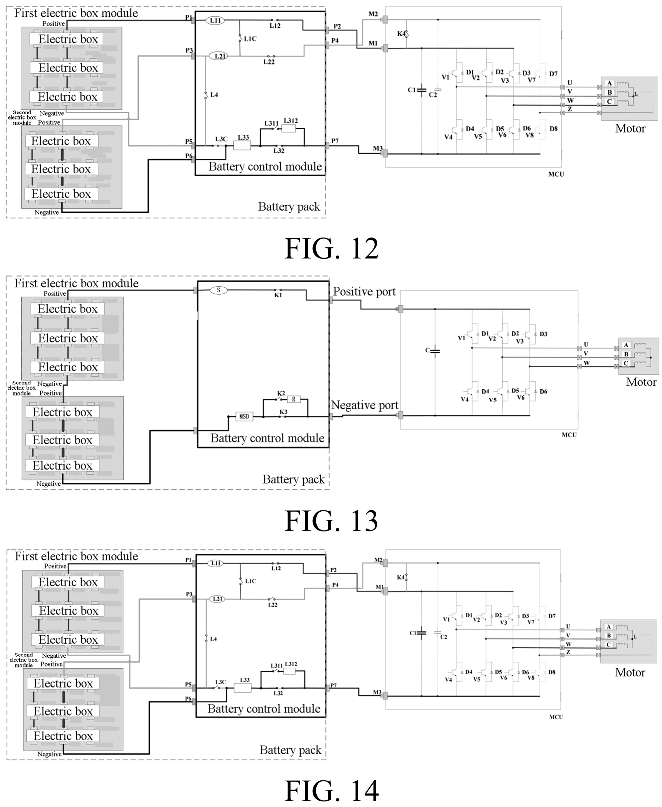

FIG. 11 is a schematic architectural diagram of a battery control system in a traveling mode corresponding to a double-branch parallel battery module according to an embodiment of the present application, and FIG. 12 is a schematic architectural diagram of a battery control system in a heating mode corresponding to a double-branch parallel battery module according to an embodiment of the present application. As shown in FIG. 11 and FIG. 12, the battery control system provided in this embodiment of the present application may include: a battery pack and a motor control circuit, where the battery pack includes a first battery module, a second battery module, and a battery control module (for a structure of the battery control module, reference may be made to the structure shown in FIG. 7). A positive electrode of the first battery module is connected to a first battery positive port P1 of the battery control module, a positive electrode of the second battery module is connected to a second battery positive port P3 of the battery control module, a negative electrode of the first battery module is connected to a first battery negative port P5 of the battery control module, and a negative electrode of the second battery module is connected to a second battery negative port P6 of the battery control module.

The motor control circuit may include: an MCU and a motor (including an A-phase winding, a B-phase winding, a C-phase winding, and a neutral winding L-phase), where the MCU may include a first capacitor C1, three bridge arms (that is, a first bridge arm module) that are respectively connected to the A-phase winding, the B-phase winding, and the C-phase winding of the motor, a second capacitor C2, one bridge arm (that is, a second bridge arm module) connected to the L-phase winding of the motor, and a switch K4 (that is, a third control circuit) between the first capacitor C1 and the second capacitor C2. Each bridge arm includes an upper bridge arm switch tube and a lower bridge arm switch tube.

As shown in FIG. 11 and FIG. 12, a first loop positive port P2 of the battery control module is connected to a first positive port of the motor control circuit, to be connected to the first capacitor C1 in the MCU; a second loop positive port P2 of the battery control module is connected to a second positive port of the motor control circuit, to be connected to the second capacitor C2 in the MCU; and a loop negative port P7 of the battery control module is connected to a negative port of the motor control circuit.

As shown in FIG. 11, when the battery control module is in the traveling mode, the first switch L12 in the first circuit L1, the fourth switch L32 in the third circuit L3, the sixth switch in the first control circuit L3C, and the seventh switch in the second control circuit L1C in the battery control module are in an on state, and the remaining switches are in an off state, so that the first battery module and the second battery module provide a power source for the motor in the motor control circuit.

As shown in FIG. 12, when the battery control module is in the heating mode, the first switch L12 in the first circuit L1, the second switch L22 in the second circuit L2, the fourth switch L32 in the third circuit L3, and the sixth switch in the first control circuit L3C in the battery control module are in an on state, and the remaining switches are in an off state, so that the first battery module and the second battery module are respectively connected to the motor control circuit to form a heating loop between the first battery module and the second battery module, and a current is transmitted between the first battery module and the second battery module through the heating loop. Therefore, the two branches of the first battery module and the second battery module are heated rapidly at different frequencies, which is conducive to satisfying a heating requirement of a high temperature rising rate.

A current transmission direction between the first battery module and the second battery module may be changed, that is, continuously changed between transmitting a current from the first battery module to the second battery module (for example, a current flow direction is: the positive electrode of the first battery module→the first battery positive port P1 of the battery control module→the first current sensor L11→the first switch L12→the first loop positive port P2 of the battery control module→the first positive port of the motor control circuit→the switch tubes V1/V2/V3→the A-phase winding/the B-phase winding/the C-phase winding→the L-phase winding→the diode D7→the second positive port of the motor control circuit→the second loop positive port P4 of the battery control module→the second switch L22→the second current sensor L21→the second battery positive port P3 of the battery control module→the positive electrode of the second battery module) and transmitting a current from the second battery module to the first battery module (for example, a current flow direction is: the positive electrode of the second battery module→the second battery positive port P3 of the battery control module→the second current sensor L21→the second switch L22→the second loop positive port P4 of the battery control module→the second positive port of the motor control circuit→the switch tube V7→the L-phase winding→the A-phase winding/the B-phase winding/the C-phase winding→the diodes D1/D2/D3→the first positive port of the motor control circuit→the first loop positive port P2 of the battery control module→the first switch L12-the first current sensor L11-the first battery positive port P1 of the battery control module→the positive electrode of the first battery module).

### 3) Double-branch series battery module

FIG. 13 is a schematic architectural diagram of a battery control system corresponding to a double-branch series battery module in the related art. As shown in FIG. 13, the battery control system provided in the related art may include: a battery pack and a motor control circuit, where the battery pack includes a first battery module, a second battery module, and a battery control module, and each battery module includes a plurality of electric boxes connected in series (three electric boxes are shown as an example in the figure).

A positive electrode of the first battery module is connected to a positive port of the motor control circuit through a current sensor S and a switch K1 in the battery control module; a negative electrode of the first battery module is connected to a positive electrode of the second battery module; and a negative electrode of the second battery module is connected to a negative port of the motor control circuit through a fuse MSD and a parallel circuit (a parallel circuit formed by a switch K3 and a series circuit of a switch K2 and a resistor R) in the battery control module.

It should be noted that, when the battery control module is in a traveling mode or a heating mode, the switch K1 and the switch K3 in the battery control module are in an on state. A structure of the battery control module in the related art is fixed, so that a battery can only be heated at a low temperature rising rate by controlling a motor through an MCU to charge or discharge the battery through the battery control module in the related art.

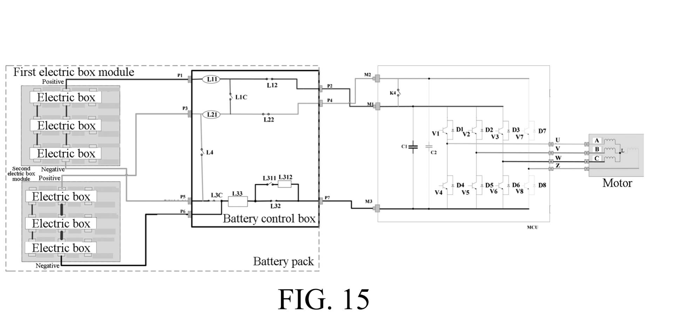

FIG. 14 is a schematic architectural diagram of a battery control system in a traveling mode corresponding to a double-branch series battery module according to an embodiment of the present application, and FIG. 15 is a schematic architectural diagram of a battery control system in a heating mode corresponding to a double-branch series battery module according to an embodiment of the present application. As shown in FIG. 14 and FIG. 15, the battery control system provided in this embodiment of the present application may include: a battery pack and a motor control circuit, where the battery pack includes a first battery module, a second battery module, and a battery control module (for a structure of the battery control module, reference may be made to the structure shown in FIG. 7). A positive electrode of the first battery module is connected to a first battery positive port P1 of the battery control module, a positive electrode of the second battery module is connected to a second battery positive port P3 of the battery control module, a negative electrode of the first battery module is connected to a first battery negative port P5 of the battery control module, and a negative electrode of the second battery module is connected to a second battery negative port P6 of the battery control module.

As shown in FIG. 14 and FIG. 15, a first loop positive port P2 of the battery control module is connected to a first positive port of the motor control circuit, to be connected to a first capacitor C1 in an MCU; a second loop positive port P2 of the battery control module is connected to a second positive port of the motor control circuit, to be connected to a second capacitor C2 in the MCU; and a loop negative port P7 of the battery control module is connected to a negative port of the motor control circuit.

As shown in FIG. 14, when the battery control module is in the traveling mode, the first switch L12 in the first circuit L1, the fourth switch L32 in the third circuit L3, and the fifth switch in the fourth circuit L4 in the battery control module are in an on state, and the remaining switches are in an off state, so that the first battery module and the second battery module provide a power source for a motor in the motor control circuit.

As shown in FIG. 15, when the battery control module is in the heating mode, the first switch L12 in the first circuit L1, the second switch L22 in the second circuit L2, the fourth switch L32 in the third circuit L3, and the sixth switch in the first control circuit L3C in the battery control module are in an on state, and the remaining switches are in an off state, so that the first battery module and the second battery module are respectively connected to the motor control circuit to form a heating loop between the first battery module and the second battery module, and a current is transmitted between the first battery module and the second battery module through the heating loop. Therefore, the two branches of the first battery module and the second battery module are heated rapidly at different frequencies, which is conducive to satisfying a heating requirement of a high temperature rising rate.

It should be noted that, when the battery control module is in the heating mode, for related content of a current transmission direction between the first battery module and the second battery module, reference may be made to the related content in the foregoing embodiments, and details are not described herein again.

Based on the above, in the embodiments of the present application, each circuit in the battery control module may be a circuit with an adjustable on-off state, to switch the circuit connection relationship between the first battery module and the second battery module with the motor control circuit. Therefore, a connection loop in the battery control module can be simply adjusted according to different battery grouping types, so that output requirements of battery modules of different grouping types can be satisfied, and the present application can be simply and flexibly applied to the battery modules of different grouping types. In addition, a heating loop between the first battery module and the second battery module can be formed by switching the connection loop in the battery control module, so that a current is transmitted between the first battery module and the second battery module through the heating loop, thereby satisfying a requirement of heating the first battery module and the second battery module at a high temperature rising rate.

In some embodiments, a battery pack is further provided. The battery pack includes a first battery module, a second battery module, and the battery control module according to the embodiments of the present application, and their implementation principles and technical effects are similar. Details are not described herein again.

It should be noted that, the battery control module may alternatively be located outside the battery pack, which is not limited to being located in the battery pack.

In some embodiments, a battery control system is further provided. The battery control system includes a motor control circuit and the battery pack according to the embodiments of the present application, and their implementation principles and technical effects are similar. Details are not described herein again.

For example, the motor control circuit includes: a first bridge arm module, a second bridge arm module, and a third control circuit, a first end of the first bridge arm module is connected to the first circuit, a second end of the first bridge arm module is connected to the third circuit, a first end of the second bridge arm module is connected to the second circuit, a second end of the second bridge arm module is connected to the second end of the first bridge arm module, and the third control circuit is arranged between the first end of the first bridge arm module and the first end of the second bridge arm module; and
when the battery control module is in a first mode, the third control circuit is in an off state; or
when the battery control module is in a second mode, the third control circuit is in an on state.

For related content of the first bridge arm module, the second bridge arm module, and the third control circuit, reference may be made to related records in the foregoing embodiments, and details are not described herein again.

Finally, it should be noted that the foregoing embodiments are only used for describing the technical solutions of the present application, but are not intended to limit the present application. Although the present application has been described in detail with reference to the foregoing embodiments, a person of ordinary skill in the art should understand that modifications may still be made to the technical solutions recorded in the embodiments or equivalent replacements may be made to some or all technical features of the present application; and these modifications or replacements will not cause the essence of corresponding technical solutions to depart from the scope of the technical solutions in the embodiments of the present application, and should be all included in the scope of the claims and the specification of the present application. Especially, as long as no structural conflict is caused, various technical features mentioned in various embodiments may be combined freely. The present application is not limited to the specific embodiments disclosed herein, but includes all technical solutions falling within the scope of the claims.

## Claims

1. A battery control module, wherein the battery control module comprises: a first circuit, a second circuit, and a third circuit, wherein the first circuit is connected to a positive electrode of a first battery module, the second circuit is connected to a positive electrode of a second battery module, and negative electrodes of the first battery module and the second battery module are both connected to the third circuit; the first circuit, the second circuit, and the third circuit are connected to a motor control circuit; and
each circuit in the battery control module is a circuit with an adjustable on-off state, to switch a circuit connection relationship between the first battery module and the second battery module with the motor control circuit.

2. The battery control module according to claim 1, wherein when the battery control module is in different modes, at least one circuit in the battery control module has different on-off states.

3. The battery control module according to claim 1, wherein when the battery control module is in a first mode, the first circuit, the second circuit, and the third circuit are all in an on state, and the first battery module and the second battery module are respectively connected to the motor control circuit to form a heating loop, to heat the first battery module and the second battery module.

4. The battery control module according to claim 1, wherein when the battery control module is in a second mode, the first circuit and the third circuit are in an on state, the second circuit is in an off state, and the first battery module and the second battery module are connected to the motor control circuit, to jointly provide electric energy for the motor control circuit.

5. The battery control module according to any one of claims 1 to 4, wherein the battery control module further comprises a fourth circuit, a first end of the fourth circuit is connected to the second circuit, a second end of the fourth circuit is connected to the third circuit, and the fourth circuit controls the first battery module and the second battery module to be connected in series or connected in parallel.

6. The battery control module according to claim 5, wherein the third circuit comprises a first control circuit, and the first control circuit is connected to the negative electrode of the first battery module; and
when the battery control module is in the first mode, the first control circuit is in an on state; or
when the battery control module is in the second mode and the first battery module and the second battery module are connected in parallel, the first control circuit is in an on state.

7. The battery control module according to claim 5, wherein the first circuit comprises a second control circuit, and a first end of the second control circuit is connected to the second circuit; and
when the battery control module is in the second mode and the first battery module and the second battery module are connected in parallel, the second control circuit is in an on state.

8. The battery control module according to claim 5, wherein when the battery control module is in the second mode and the first battery module and the second battery module are connected in series, the fourth circuit is an on state.

9. The battery control module according to claim 7, wherein the first circuit further comprises: a first current sensor and a first switch that are connected in series, wherein a second end of the second control circuit is connected to the first current sensor and the first switch, and when the first switch is in a switch-on state, the first circuit is in the on state; or when the first switch is in a switch-off state, the first circuit is in an off state.

10. The battery control module according to any one of claims 1 to 4 or 6 to 9, wherein the second circuit comprises: a second current sensor and a second switch that are connected in series, wherein when the second switch is in a switch-on state, the second circuit is in the on state; or when the second switch is in a switch-off state, the second circuit is in the off state.

11. The battery control module according to claim 6, wherein the third circuit further comprises a pre-charging circuit, wherein the pre-charging circuit comprises a third switch and a pre-charging resistor that are connected in series, a first end of the third switch is connected to the first control circuit and the negative electrode of the second battery module, a second end of the third switch is connected to a first end of the pre-charging resistor, and a second end of the pre-charging resistor is connected to the motor control circuit.

12. The battery control module according to claim 11, wherein the third circuit further comprises a fourth switch, a first end of the fourth switch is connected to the first control circuit and the negative electrode of the second battery module, and a second end of the fourth switch is connected to the motor control circuit.

13. The battery control module according to claim 12, wherein the third circuit further comprises a fuse, wherein the fuse is connected to the fourth switch in series.

14. A battery pack, wherein the battery pack comprises a first battery module, a second battery module, and the battery control module according to any one of claims 1 to 13.

15. A battery control system, wherein the battery control system comprises a motor control circuit and the battery pack according to claim 14.

16. The battery control system according to claim 15, wherein the motor control circuit comprises: a first bridge arm module, a second bridge arm module, and a third control circuit, a first end of the first bridge arm module is connected to the first circuit, a second end of the first bridge arm module is connected to the third circuit, a first end of the second bridge arm module is connected to the second circuit, a second end of the second bridge arm module is connected to the second end of the first bridge arm module, and the third control circuit is arranged between the first end of the first bridge arm module and the first end of the second bridge arm module; and
when the battery control module is in a first mode, the third control circuit is in an off state; or
when the battery control module is in a second mode, the third control circuit is in an on state.
